# EUROPEAN PATENT SPECIFICATION

(11) **EP 0 350 312 B1**
(45) Date of publication and mention of the grant of the patent: **10.04.1996**
(21) Application number: 89306888.2
(22) Date of filing: 06.07.1989
(51) Int. Cl.: C08L 23/28, B60C 1/00, C08L 23/22

(54) **Elastomeric compositions and processes for their preparation**
Elastomere Zusammensetzung und Verfahren zu deren Herstellung
Compositions élastomères et leurs procédés de préparation

(30) Priority: 08.07.1988 GB 8816310
(43) Date of publication of application: 10.01.1990
(73) Proprietor: EXXON CHEMICAL PATENTS INC., Florham Park New Jersey 07932 (US)
(72) Inventor: Costemalle, Bernard Jean, B-1640 Rhode St Genese (BE); Hous, Pierre, B-3080 Steenokkerzeel (BE)
(74) Representative: Bawden, Peter Charles

(56) References cited:
- GB-A- 952 336
- US-A- 4 273 893

## Description

This invention relates to elastomeric compositions and processes for their preparation.

Although halobutyl rubbers are much used, for example for tyre liners, they do have some disadvantages. These include the difficulty of processing and more particularly obtaining a fast cure rate without causing scorching; of obtaining a satisfactory balance between the green strength (strength of uncured rubber) and the stress relaxation and of obtaining high cured adhesion onto general purpose rubber (GPR) substrates.

We have found that these disadvantages are substantially overcome and other advantages achieved by adding an olefin polymer with anionic groups to the halobutyl rubber instead of using the halobutyl rubber on its own. Such mixtures have not been suggested or disclosed in the art as far as we have been able to ascertain :

US-A-4348501 discloses blends of a thermoplastic carboxy containing ethylene copolymer and cross-linked epichlorhydrin dispersed throughout the resin as small discrete particles. The resulting blend is processed as a thermoplastic material and is not thermoset after a curing step.

GB-A-2179046 A discloses blends of different rubbers, with optionally added brominated butyl rubber and carboxylated rubbers for vibration mounts. There is no disclosure of the utility of bromobutyl and non-elastomer ethylene based polymers containing carboxy groups.

GB-A-1424041 discloses a rubber containing material which has a low viscosity by the use of a compatible liquid polymer or copolymer of a diene which takes part in a curing process not employing sulphur. The rubber may contain a reactive halogen but the normally occurring allylic halogen of bromobutyl or chlorobutyl is not identified as a possible active group. The diene derived component is liquid. The diene component may be copolymerised with an ionic group-containing copolymer but 75% remains diene derived and there is no ethylene based monomer component.

EP-A-55 848 discloses a water absorbing rubber based composition with added thereto a cross-linked waterabsorbing resin of a polymer having at least 40 mol % of a carboxyl group containing component. There is no teaching of the use of the reaction of allylic halogen in, say, bromobutyl or the use of a olefin polymer with a low carboxy group content. There is no disclosure of the joint curing of an halobutyl, carboxy-containing olefin polymer into a fairly hydrophobic, high modulus material for use in applications where rubber or butyl was used singly previously, such as for tyre walls.

GB-A-1096 879 suggests use (see p5 line 25) of a blend of sulphonated polymers of perfluorostyrene with other vinyl polymers. Page 2 line 1 indicates that the halo-substituents are not reactive. There is no teaching to use a reactive halogen containing polymer in conjunction with an olefin polymer to provide cross-linkable blend.

US-A-4593062 discloses a thermoplastic mouldable composition having a continuous phase a thermoplastic material and in situ, dynamically vulcanised rubber particles containing halobutyl to give a DVA or TPO. The thermoplastic material is a polyolefin resin which according to a not-preferred embodiment may be a copolymer of ethylene with acrylic acid. The rubber also essentially contains a polychloroprene rubber. The proportions suggested for polychloroprene, the olefin resin and the halogenated butyl rubber are 1:1:1 (cf claim 8) or from 90 to 110 wt% by reference to the polyolefin (see column 7). US-A-4593062 does not disclose a thermoset composition of which a minor proportion is olefinic anionic group-containing copolymer nor a composition free of chloroprene or a composition which can incorporate a cure system in a green state for subsequent curing. The olefin resin and halogenated butyl rubber are not intimately mixed to permit and promote their mutual cross-linking and compatibility.

In accordance with the invention there is firstly provided a process for preparing an elastomeric composition which includes preparing a master blend, the polymeric components of which comprise a rubber comprising a halobutyl rubber and a non-elastomeric copolymer of an olefin containing non-neutralized acid groups the proportion of rubber being 50% or more by weight and the proportion of copolymer being less then 50% by weight, the blend being free from a continuous thermoplastic olefin polymer phase the blend optionally containing a filler, at a first temperature, cooling the mixture and adding a cross-linking system at a second temperature below the first and press-curing the mixture at a third temperature above the first temperature.

The acid groups may be the unneutralized carboxylic acid groups of ethylene copolymers which may in addition contain neutralized carboxylic acid groups. The uncured strength of the blend is improved.

Secondly there is provided a press-curable elastomeric composition comprising a blend of a rubber comprising a halobutyl rubber and a non-elastomeric olefin copolymer containing non-neutralized acid groups, the proportion of rubber being 50% or more by weight and the proportion of copolymer being less than 50% by weight the blend being free from a continuous thermoplastic olefin polymer phase. The copolymer may be a copolymer of an olefin and an unsaturated carboxylic acid. Preferably the polymer content of the blend consists predominantly of the halobutyl rubber and the olefin copolymer. This blend may be stored without the presence of a cross-linking system.

By a rubber containing a halobutyl rubber is meant for example one containing at least 50% by weight of halobutyl rubber. Advantageously substantially no non-functional olefin resin is present. Advantageously substantially no polychloroprene is present. Hence the composition preferably is a binary blend consisting essentially - as far as polymeric components are concerned - of the halobutyl and a copolymer containing non-neutralised acid groups. The amounts and nature of the components of such blends should be selected to provide an intimately mixed blend without a continuous thermoplastic olefin polymer phase.

The rubber is a halobutyl rubber, i.e., a halogenated butyl rubber such as a copolymer of 70-95% by weight of combined isoolefin having from 4 to 8 carbon atoms per molecule and 0.5 to 30% by weight of combined multiolefin having 4 to 14 carbon atoms per molecule. Preferably the butyl rubber from which the halobutyl rubber is derived contains 85 to 99.5% by weight (especially 95 to 99.5% by weight) of a C₄ to C₇ isoolefin, such as isobutene and 0.5 to 15% by weight (especially 0.5 to 5% by weight) of a conjugated C₄ to C₁₀ multi-olefin. The textbook "Synthetic Rubber" by G.S. Whithby (1954 edition by John Wiley & Sons Inc.) pp 608 - 609 and "Encyclopaedia of Chemical Technology", 3rd Edition Vol. 8 (1979) pp 470 - 484 give a description of butyl rubber.

The preparation of butyl-type rubbers is amply described and, in general, it consists of the reaction product of a C₄ - C₇ isoolefin (preferably isobutylene) with a C₄ - C₁₀ (preferably a C₄ - C₆) conjugated diolefin, such as isoprene, butadiene, dimethyl butadiene, and piperylene. The reaction product of isobutylene and isoprene is preferred. The preparation of butyl rubber is also described in US-A-2,356,128

Conventional high molecular weight butyl rubber generally has a number average molecular weight of about 25,000 to about 500,000, preferably about 80,000 to about 300,000 especially about 100,000 to about 250,000; and a Wijs Iodine No. of about 0.5 to 50, preferably 1 to 20. More recently low molecular weight polymers have also been prepared which have number average molecular weights of from 5,000 to 25,000 and unsaturation expressed as mole %, of 2-10.

Chlorinated and brominated butyl rubber generally contain at least 0.5 weight % combined halogen and up to 1 atom of halogen per double bond in the copolymer; chlorobrominated butyl rubber generally contains from 1.0 to 3.0 weight % bromine and from 0.05 to 0.5 weight % chlorine.

If the rubber forming the major proportion by weight of the composition of this invention is a mixture of a halobutyl rubber and another rubber, the other rubber can for example be natural rubber (NR), polybutadiene rubber or styrene - butadiene rubber (SBR).

When a mixture of rubbers is used the halobutyl rubber usually forms a major proportion by weight of the mixture, for example 50 to 80 weight %, e.g. about 60 weight %.

The copolymer is derived from olefin (with which term generally mono-olefins are indicated) and an unsaturated carboxylic acid. The olefin is preferably of low molecular weight and C₂ to C₅ olefins are useful. Particularly preferred olefins are propylene and especially ethylene.

The unsaturated carboxylic acid is preferably an ethylenically unsaturated carboxylic acid and should contain one or more double bonds. It may be a polycarboxylic acid, e.g. an alpha-beta ethylenically unsaturated carboxylic acid preferably containing 4 to 8 carbon atoms e.g. 4 to 6 carbon atoms per molecule, such as maleic acid, fumaric acid or itaconic acid. Preferably however, it is a monocarboxylic acid, e.g. an alpha-beta ethylenically unsaturated carboxylic acid having 3 to 8 carbon atoms e.g. 3 to 5 carbon atoms per molecule, for instance, acrylic acid, methacrylic acid, crotonic acid or ethacrylic acid. In general ethylenically unsaturated acids having 2 to 5 carbon atoms (not including the acid group carbon(s)) per molecule are preferred.

Acrylic acid is the most preferred acid.

It is preferred that the copolymer has at least 50 mole % of olefin e.g. 60 to 80 mole % of olefin. The number average molecular weight of the ethylene-acrylic acid copolymers is typically between 500 and 5000, e.g. 1500 to 4000, the acid number between 10 and 200, preferably 20 to 130 mgKOH/g and the density between 0.91 and 0.95 usually between 0.925 and 0.945.

The Vicat softening point of the copolymers is usually between 55° and 90°C and the melting point between 85° and 110°C. The melt index determined by ASTM method D-1238 is usually 1 to 100 g/10 minutes, e.g. from 1.5 to 8.5 g/10 minutes for ethylene/acrylic acid copolymers and from 1.0 to 6.0 g/10 minutes for ethylene/methacrylic acid copolymers, the value increasing with increasing ethylene content.

A preferred copolymer of ethylene and acrylic acid has the following properties:

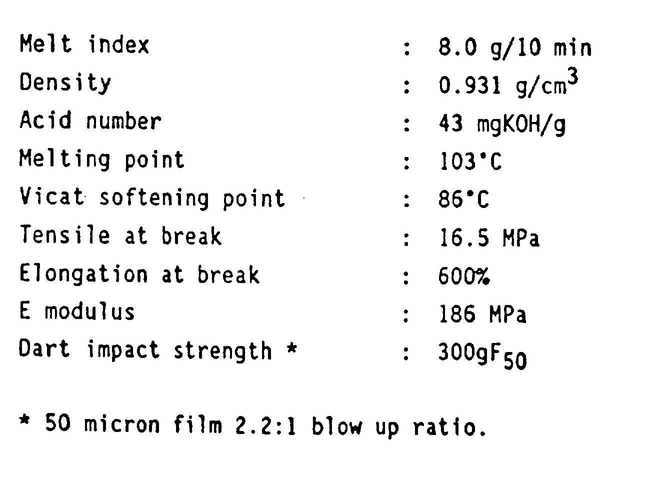

The copolymers are usually prepared by polymerising the monomers in the vapour phase at high pressure, usually 1500 to 2500 bars, at a temperature usually between 150°C and 250°C preferably between 190°C and 220°C, using a free radical initiator. Suitable initiators are peroxyesters such as peroxypivalates, peroctoates or perbenzoates or a mixture of these or peroxides.

The polymerisation reaction can be continuous and the product can be continually withdrawn from the reactor as it is formed. The viscosity of the product is controlled by using a transfer agent such as isobutylene. Other suitable transfer agents are compounds such as an alcohol, a ketone, an aldehyde or an aliphatic or aromatic hydrocarbon.

It is preferred that the weight ratio of olefin copolymer to rubber comprising halobutyl rubber is between 40:60 and 5:95 preferably between 25:75 and 10:90 especially about 15:85.

To obtain the composition of this invention in a usable form, for example as a sheet or a slab, it is desirable that the copolymer and rubber comprising halobutyl rubber be submitted to high shear mixing generally without a cross-linking/vulcanising system. This can be achieved by introducing the blend of rubber and copolymer into a mixer such as an internal mixer or a Banbury mixer. The blend is then subjected to thorough mixing.

It is usual to add one or more additives or fillers to the mixture of rubber and copolymer. Examples of such additives with typical amounts (in parts by weight based on 100 parts by weight of rubber plus copolymer) are carbon black (e.g. GPF, HAF) 40 to 70 e.g. 50, oil (e.g. naphthenic oil Flexon 580 or paraffinic oil Flexon 876 or aromatic oil Dutrex R) 5 to 10 e.g. 7 to 8; stearic acid, 0.5 to 1.5, e.g. 1.0. The curing/vulcanising system components, generally added later at a low inactive temperature, may include zinc oxide 1 to 10 e.g. 3; sulphur 0.1 to 1.0 e.g. 0.5; MBTS (mercapto benzo thiazyl disulphide) 0.5 to 2.0, e.g. 1.5 and zinc stearate, 1.0 to 5.0 e.g. 1.5. The zinc oxide, sulphur, MBTS and zinc stearate constitute only one of the cure systems which may be used in practice. Other cure system variations are possible. The cure system incorporates a neutralising agent which can help to form ionomers and also contributes to linking of the copolymer and the rubber.

To obtain the composition of the invention in as for example a sheet, after mixing thoroughly with or without additives in the mixer, it can be extruded or calendered. The sheet thereby obtained is still in the green or uncured state. The addition of the acid group containing polymer appears to help in avoiding premature undesirable curing.

The composition thereby obtained has the following advantages over pure halobutyl rubber: Mooney Scorch much improved especially in the case of chlorobutyl; the T₉₀ technical cure time is shortened by nearly 25 % at 150°C, the green strength is increased (highest modulus of elasticity), hardness and particularly hot modulus as shown on the rheographs; and very importantly there is better adhesion to an elastomer e.g. general purpose rubber.

Accordingly, this invention also provides the use of a composition having good adhesion to an elastomer, said composition comprising an intimately mixed blend of a major proportion by weight of a rubber comprising a halobutyl rubber and a minor proportion by weight of a copolymer of an olefin and an unsaturated carboxylic acid.

When using the adhesive properties of the composition of this invention to adhere to an elastomeric substrate, the substrate and the composition should preferably be covulcanised. Accordingly this invention provides an elastomeric composition comprising an elastomeric substrate supporting an intimately mixed blend of a major proportion by weight of a rubber comprising a halobutyl rubber and a minor proportion by weight of a copolymer of an olefin and an unsaturated carboxylic acid, said substrate and said blend having been co-covulcanised.

The elastomeric substrate can comprise any rubber or mixture of rubbers, but is preferably general purpose rubber, e.g. natural rubber polybutadiene rubber, styrene - butadiene rubber, carboxylated styrene-butadiene rubber, carboxylated styrene-butadiene rubber, polyisoprene rubber, acrylonitrile-butadiene - styrene rubber or any mixture thereof.

For one particularly suitable application the substrate is the carcass of a tyre and the blend is the tyre inner liner. In this particular case the carcass is usually natural rubber or a blend of natural rubber and styrene-butadiene rubber (SBR). To obtain the desired tyre the carcass and inner liner and other components (e.g. tread, sidewall, beads) are moulded and the "green" (uncured) tyre is passed to a curing press where the tyre is vulcanised. This is achieved by raising the temperature of and increasing the pressure on the tyre. Typically, the temperature is 120°C to 200°C, e.g. about 150°C and the pressure is 1 to 10 Pa e.g. about 5 Pa. The curing time is typically 15 min to 1 hour, for example about 30 minutes.

Cured tyres manufactured using as inner liner the combination of an olefin copolymer and a rubber comprising a halobutyl rubber compared with those made using only halobutyl rubber as the inner liner have the following advantages:

The modulus of elasticity, and tensile strength are strongly improved, particularly with chlorobutyl. The basic cured adhesion (i.e. a measure which takes account of difference in modulus of halobutyl compounds) onto natural rubber or natural rubber/SBR carcasses is generally improved, particularly in the case of chlorobutyl. For chlorobutyl, the flex to fatigue characteristics are strongly improved. The blend responds to cure system chemicals in the same overall manner as natural rubber, so facilitating optimisation of process conditions. Whilst the green strength is higher, the fast stress decay or low elastic memory improves processing and product quality.

### Example 1

Two different blends were prepared based on chlorobutyl rubber, one containing a copolymer of ethylene and acrylic acid. Two other blends were prepared based on bromobutyl rubber, one containing the same copolymer of ethylene and acrylic acid.

The chlorobutyl rubber (Chlorobutyl 1066 of Exxon Chemical Company) and the bromobutyl rubber (Bromobutyl 2222 of Exxon Chemical Company) had the following properties:

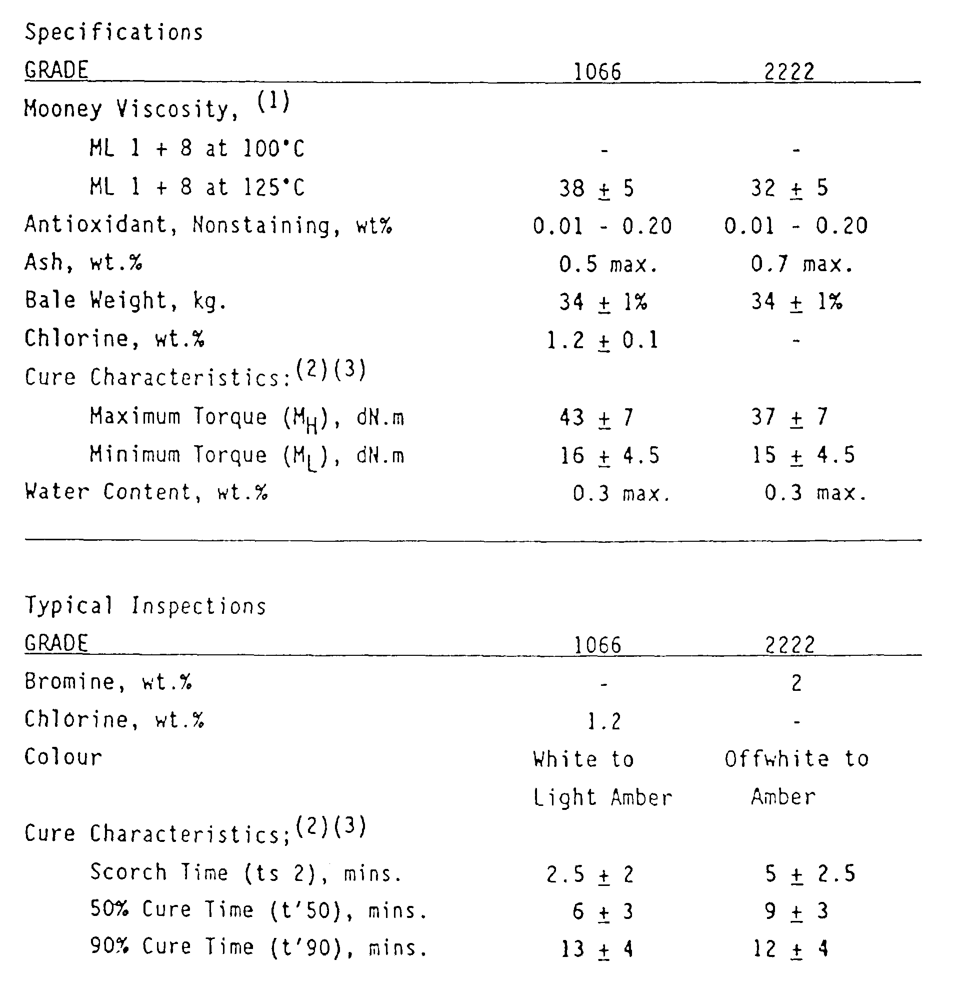

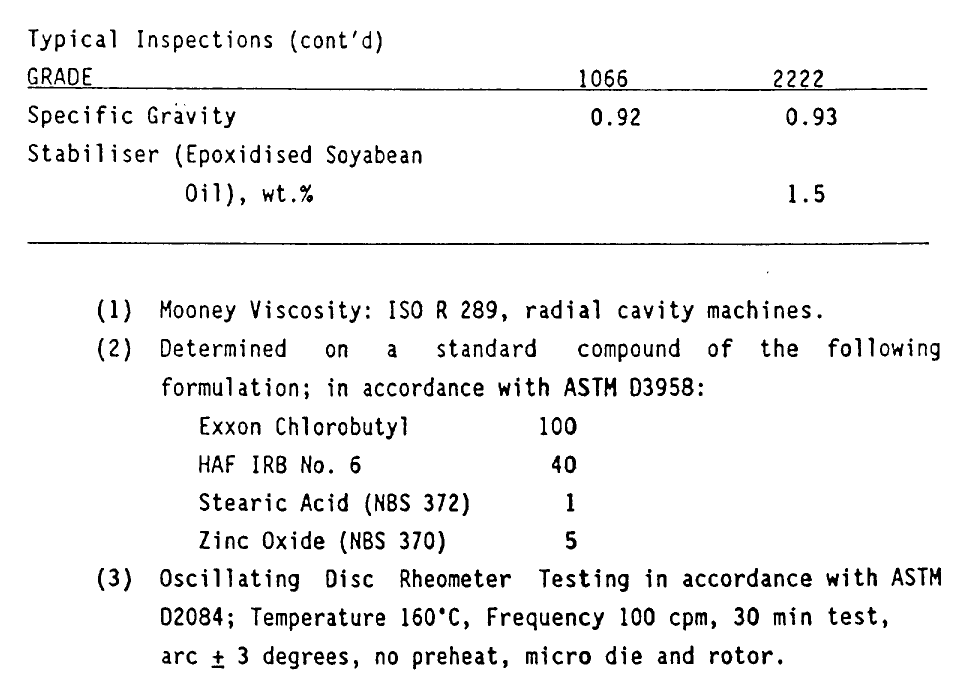

The ethylene copolymer (TR5000) contained 94 weight % of ethylene units and 6 weight % of acrylic acid units. Its other properties were as follows:

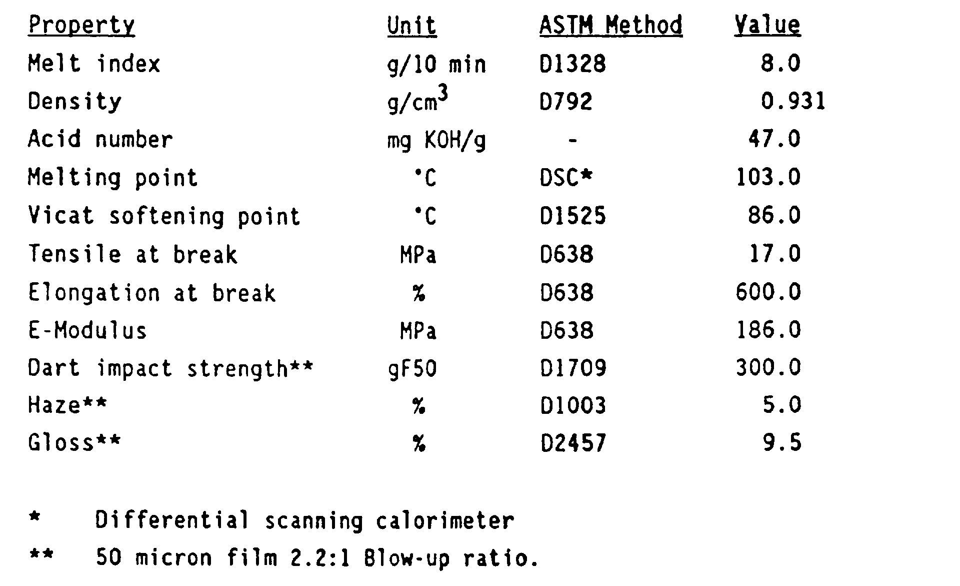

Other additives which were included in the four blends were carbon black (GPF N-660) , paraffinic oil (Flexon 876) , stearic acid, zinc oxide, sulphur, mercapto benzo thiazyl disulphide (MBTS) and zinc stearate. The exact composition (in parts by weight) of the four blends (comparative) A, B, (comparative) C and D were as follows:

| | | A | B | C | D |
|---|---|---|---|---|---|
| | | Comparative | | Comparative | |
| | Chlorobutyl rubber | 100 | 100 | - | - |
| | Bromobutyl rubber | - | - | 100 | 100 |
| | Ethylene copolymer | - | 15 | - | 15 |
| | GPF N-660 | 50 | 50 | 50 | 50 |
| | Flexon 876 | 8 | 8 | 8 | 8 |
| | Stearic acid | 1 | 1 | 1 | 1 |
| | Zinc oxide | 3 | 3 | 3 | 3 |
| | Sulphur | 0.5 | 0.5 | 0.5 | 0.5 |
| | MBTS | 1.5 | 1.5 | 1.5 | 1.5 |
| | Zinc stearate | 2 | 2 | 2 | 2 |

The four blends were each thoroughly mixed in a small Banbury mixer. For the first 1.5 minutes the halobutyl rubber, one third the carbon black and all the ethylene copolymer were mixed. The remainder of the carbon black was then added and the paraffinic oils and all the other additives were added and the mixing continued for another 2.5 minutes until a temperature of 140°C was reached. The blends were then dumped and cooled down.

After cooling to room temperature, the blends were then reintroduced into the mixer, the zinc oxide, sulphur, MBTS and zinc stearate were added and the compounds were mixed and dumped at 90°C.

Thereafter the blends were placed in a mould and cured at a temperature of 180°C for 15 minutes under pressure.

Various physical properties were measured for each of the blends (comparative) A, B, (comparative) C and D and the results are given in Table 1.

The Mooney viscosity, stress relaxation, green strength and self-tack relate to the uncured blends and the other data relate to the cured blends.

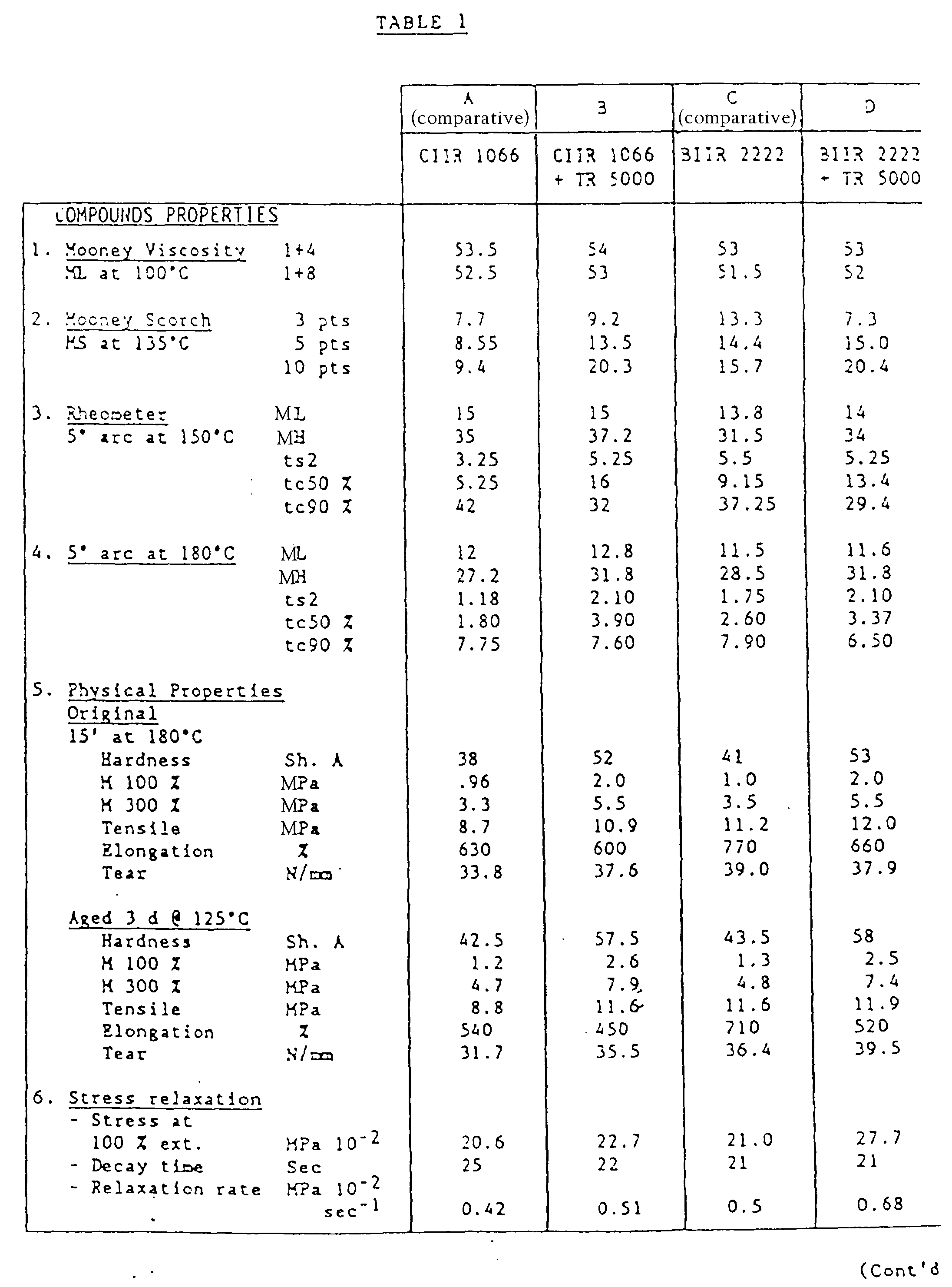

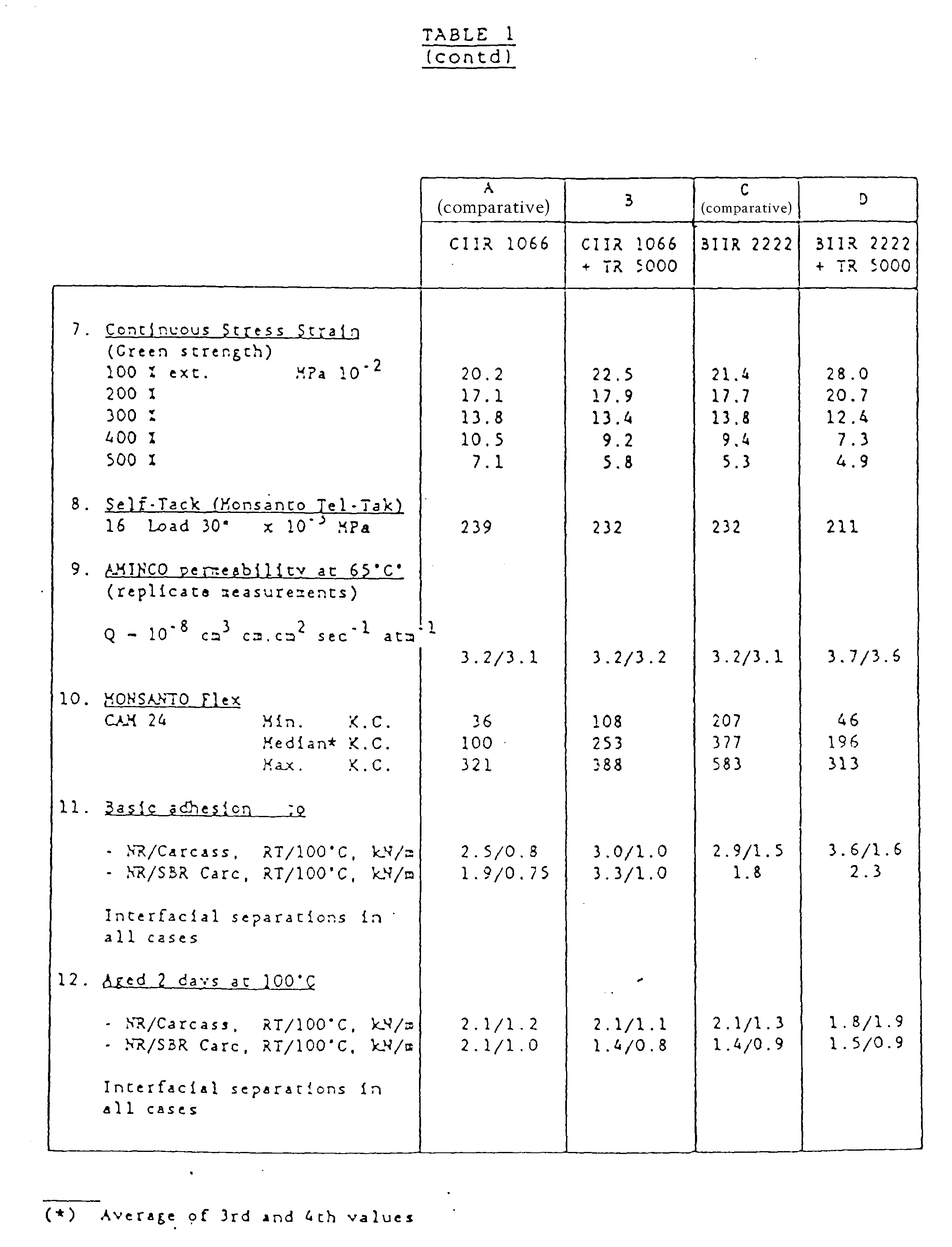

In general, it can be seen that blends B and D show advantages over respectively (comparative) A and (comparative) C in terms of scorch/cure time balance, improved modulus and tensile strength, green strength and stress relaxation rate, improved "true" or basic adhesion to NR or NR/SBR substrates. This indicates the advantage of the inclusion of the ethylene copolymer in the blends.

### Example 2

An elastomeric blend (control) H was prepared by mixing in a Banbury mixer 60 parts by weight of the chlorobutyl rubber used in Example 1, 40 parts by weight of natural rubber, 70 parts by weight of GPF carbon black, 50 parts by weight of whiting, 12 parts by weight of paraffinic oil Flexon 876, 1 part by weight of stearic acid, 3 parts by weight of zinc oxide, 1 part by weight of Vultac (an alkyl phenol disulphide curing agent), 1 part by weight of MBTS and 2 parts by weight of zinc stearate.

For comparison purposes three other blends E, F and G were prepared and these were the same as blend H except that respectively 5, 10 and 15 phr (parts by weight per hundred parts by weight of halobutyl plus natural rubber), of the ethylene copolymer used in Example 1 were also added. Two other blends (comparative) I and (comparative) J were also prepared, these being the same as blend (control) H except that respectively 0.2 and 0.5 phr (parts by weight per hundred parts by weight of chlorobutyl plus natural rubber), of magnesium oxide (Maglite D) were also added.

The blends E, F, G, (control) H, (comparative) I and (comparative) J were press-cured at 180°C for 8 minutes (blends E, F and G) 7 minutes ((control) blend H) and 15 minutes ((comparative) blends I and J).

Various physical properties for each of the blends were measured in each case and the results are given in Table 2. The Mooney viscosity and self-tack relate to the uncured blends and the other data relate to the cured blends.

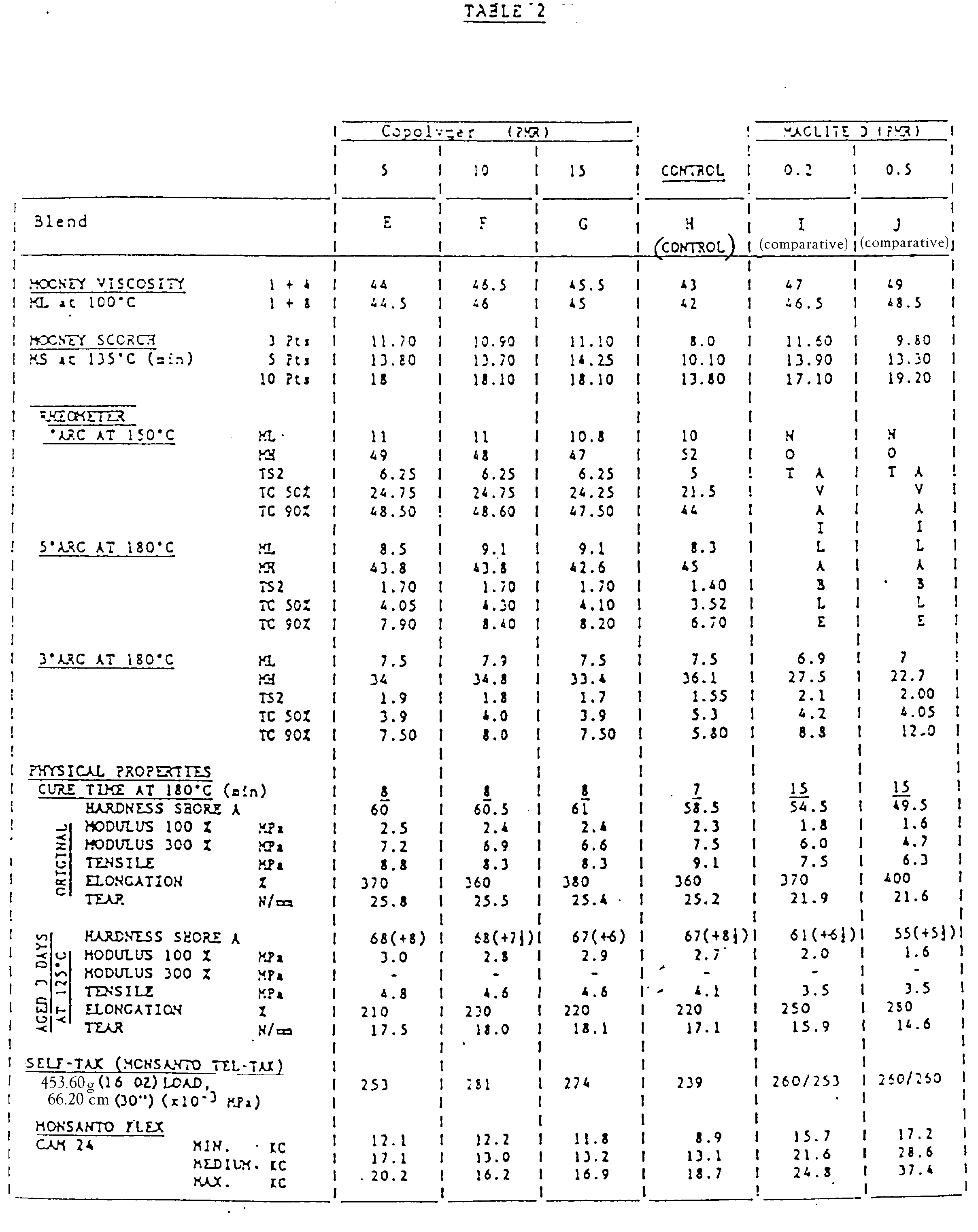

It can be seen that as little as 5 phr of ethylene copolymer vis a vis the control blend H, results in an improved scorch and compared with blends (comparative) I and (comparative) J which have been "protected" by the addition of magnesium oxide, a better balance between scorch and cure time. Tensile strength and tear resistance are better for chlorobutyl rubber and copolymer blends than for blends (comparative) I and (comparative) J protected in terms of scorch time by the addition of magnesium oxide.

EXAMPLE 3

Blends K, L, M were prepared as follows:

| | K (comparative) | L | M |
|---|---|---|---|
| Chlorobutyl 1066 | 100 | 100 | 100 |
| Carbon black GPF | 50 | 50 | 50 |
| Flexon 876 | 8 | 8 | 8 |
| Stearic acid | 1 | 1 | 1 |
| Polyethylene MI 709/10 min 00.913 | 10 | - | - |
| Escor TR 5000 | - | 10 | - |
| Escor TR 5100 (MI 8,9% AA) | - | - | 10 |

(all units are in parts by weight)

These were mixed at 140°C for 4 minutes. No curing as such was performed. The blends were cooled and mixed with ZnO (3 parts), Sulphur (0.5 parts), MBTS (1.5 parts); Zn stearate (2 parts) at a low temperature of 100°C and then press cured at 180°C.

The properties obtained were as follows:

| | K (comparative) | L | M |
|---|---|---|---|
| ML (1+8) 100°C | 56 | 55 | 58 |
| MS (t5) 135°C | 7.1 | 10.0 | 15.1 |
| Rheometer arc ± 3 180°C | | | |
| ML Min | 9.75 | 10 | 10.2 |
| MH Max | 18 | 24.2 | 27.5 |
| ts₂ Scorch Min | 1.7 | 1.7 | 2.1 |
| tc90 Cure Min | 7.4 | 9.7 | 10.8 |
| Press Cure 180°C 15 Min | | | |
| Hardness Shore A | 44 | 50 | 53 |
| Modulus 100% MPa | 1.21 | 1.58 | 1.73 |
| Modulus 300% MPa | 3.28 | 4.37 | 4.78 |
| Tensile Strength MPa | 7.28 | 8.78 | 9.75 |
| Elong. at break % | 785 | 740 | 705 |

Blends M and L provide an improved Hardness modulus and Tensile Strength over blend K (comparative), illustrating that it is not merely the presence of an olefinic backbone chain which creates the improved products of the invention.

## Claims

1. A process for preparing an elastomeric composition which includes preparing a master blend, the polymeric components of which comprise (i) a rubber comprising a halobutyl rubber and (ii) a non-elastomeric copolymer of an olefin containing non-neutralized acid groups, the proportion of rubber (i) being 50% or more by weight and the proportion of copolymer (ii) being less than 50% by weight, the blend being free from a continuous thermoplastic olefin polymer phase, the blend optionally containing a filler, at a first temperature, cooling the mixture and adding a cross-linking system at a second temperature below the first and press-curing the mixture at a third temperature above the first temperature.

2. A press-curable elastomeric composition comprising a blend of a rubber comprising a halobutyl rubber and a non-elastomeric olefin copolymer containing non-neutralized acid groups, the proportion of rubber being 50% or more by weight and the proportion of copolymer being less than 50% by weight the blend being free from a continuous thermoplastic olefin polymer phase.

3. A composition according to claim 2 wherein the copolymer is a copolymer of ethylene and acrylic acid.

4. A composition according to either of claims 2 and 3 wherein said rubber is a mixture of 50 to 80 weight % of a halobutyl rubber and 20 to 50 weight % of another rubber.

5. A composition according to either of claims 2 and 3, wherein said rubber consists of a halobutyl rubber.

6. A composition according to any one of claims 2 to 5, in which the halobutyl rubber is chlorobutyl rubber or a bromobutyl rubber, said halobutyl rubber containing at least 0.5 weight % of combined halogen in which there is up to one atom of halogen per rubber copolymer double bond.

7. A composition according to any one of claims 2 to 6, wherein the olefin copolymer contains 60 to 80 mole % of ethylene.

8. A composition according to any one of claims 2 to 7, wherein the weight ratio of olefin copolymer to rubber comprising a halobutyl rubber is between 25:75 and 10:90.

9. A composition according to any one of claims 2 to 8, wherein the rubber has been intimately mixed with the olefin copolymer.

10. A press-cured elastomeric composition derived from the reaction, in a blend, of a rubber comprising a halobutyl rubber and a non-elastomer olefin copolymer containing acid groups, said acid group-containing polymer being neutralized or in the presence of a neutralizing agent, to form links between the polymers of halobutyl rubber and copolymer components, the proportion of rubber in the blend being 50% or more by weight and the proportion of copolymer being less than 50% by weight, the blend being free from a continuous thermoplastic olefin polymer phase.

11. The use of a composition having good adhesion to an elastomer, said composition comprising the composition according to any one of claims 2 to 10.

12. An elastomeric composite article comprising an elastomeric substrate covulcanized with and supporting a component having a composition according to claim 10.

13. A composite article according to claim 12, wherein the substrate is the carcass of a tyre and the composition according to claim 10 is in the form of a tyre inner liner.

## Patentansprüche

1. Verfahren zur Herstellung einer Elastomerzusammensetzung, bei dem bei einer ersten Temperatur eine Vormischung (Masterblend) hergestellt wird, deren Polymerkomponenten einen Kautschuk, der einen Halogenbutylkautschuk umfaßt, und ein nicht-elastomeres Copolymer aus einem Olefin umfassen, welches nicht-neutralisierte Säuregruppen enthält, wobei der Anteil des Kautschuks 50 Gew.% oder mehr beträgt und der Anteil an Copolymer weniger als 50 Gew.% beträgt, die Mischung frei von einer kontinuierlichen Phase aus thermoplastischem Olefinpolymer ist und gegebenenfalls einen Füllstoff enthält, die Mischung abgekühlt wird und ein Vernetzungssystem bei einer zweiten Temperatur unterhalb der ersten Temperatur zugesetzt wird, und die Mischung bei einer dritten Temperatur oberhalb der ersten Temperatur pressvulkanisiert wird.

2. Pressvulkanisierbare Elastomerzusammensetzung, die eine Mischung aus einem Kautschuk, der einen Halogenbutylkautschuk umfaßt, und einem nicht-elastomeren Olefincopolymer umfaßt, das nicht-neutralisierte Säuregruppen enthält, wobei der Anteil an Kautschuk 50 Gew.% oder mehr beträgt und der Anteil an Copolymer weniger als 50 Gew.% beträgt und die Mischung frei von einer kontinuierlichen Phase aus thermoplastischem Olefinpolymer ist.

3. Zusammensetzung nach Anspruch 2, bei der das Copolymer ein Copolymer aus Ethylen und Acrylsäure ist.

4. Zusammensetzung nach einem der Ansprüche 2 und 3, bei der der Kautschuk eine Mischung aus 50 bis 80 Gew.% eines Halogenbutylkautschuks und 20 bis 50 Gew.% eines anderen Kautschuks ist.

5. Zusammensetzung nach einem der Ansprüche 2 und 3, bei der der Kautschuk aus einem Halogenbutylkautschuk besteht.

6. Zusammensetzung nach einem der Ansprüche 2 bis 5, in der der Halogenbutylkautschuk Chlorbutylkautschuk oder Brombutylkautschuk ist, wobei der Halogenbutylkautschuk mindestens 0,5 Gew.% kombiniertes Halogen enthält und bis zu einem Halogenatom pro Doppelbindung des Kautschukcopolymers vorliegt.

7. Zusammensetzung nach einem der Ansprüche 2 bis 6, bei der das Olefincopolymer 60 bis 80 Mol.% Ethylen enthält.

8. Zusammensetzung nach einem der Ansprüche 2 bis 7, bei der das Gewichtsverhältnis von Olefincopolymer zu Kautschuk, der Halogenbutylkautschuk umfaßt, zwischen 25:75 und 10:90 beträgt.

9. Zusammensetzung nach einem der Ansprüche 2 bis 8, bei der der Kautschuk mit dem Olefincopolymer innig vermischt worden ist.

10. Pressvulkanisierte Elastomerzusammensetzung, die abgeleitet ist aus der Umsetzung in einer Mischung von einem Kautschuk, der Halogenbutylkautschuk umfaßt, und einem nicht-elastomeren Olefincopolymer, das Säuregruppe enthält, wobei das Säuregruppen enthaltende Polymer neutralisiert ist oder die Umsetzung in Gegenwart eines Neutralisierungsmittels erfolgt, um Bindungen zwischen den Polymeren aus Halogenbutylkautschuk und Copolymerkomponenten zu bilden, wobei der Anteil des Kautschuks in der Mischung 50 Gew.% oder mehr beträgt und der Anteil an Copolymer weniger als 50 Gew.% beträgt und die Mischung frei von einer kontinuierlichen Phase aus thermoplastischem Olefinpolymer ist.

11. Verwendung einer Zusammensetzung mit guter Adhäsion an einem Elastomer, wobei die Zusammensetzung die Zusammensetzung gemäß einem der Ansprüche 2 bis 10 umfaßt.

12. Gegenstand aus Elastomerverbundwerkstoff, der ein Elastomersubstrat umfaßt, das mit einer Komponente mit einer Zusammensetzung gemäß Anspruch 10 covulkanisiert ist und diese trägt.

13. Gegenstand aus Elastomerverbundwerkstoff gemäß Anspruch 12, wobei das Substrat die Karkasse eines Reifens ist und die Zusammensetzung gemäß Anspruch 10 in Form einer Zwischenlage des Reifens vorliegt.

## Revendications

1. Procédé de préparation d'une composition élastomère qui comprend la préparation d'un mélange-maître, dont les constituants polymériques comprennent un caoutchouc renfermant un caoutchouc halogénobutyle et un copolymère non élastomère d'une oléfine contenant des groupes acides non neutralisés, le mélange étant dépourvu de phase de polymère d'oléfine thermoplastique continue, la proportion de caoutchouc étant égale ou supérieure à 50 % en poids et la proportion de copolymère étant inférieure à 50 % en poids, le mélange-maître contenant facultativement une charge, le refroidissement du mélange à une première température, l'addition d'un agent de réticulation à une deuxième température inférieure à la première température, et la vulcanisation sous pression du mélange à une troisième température supérieure à la première température.

2. Composition élastomère vulcanisable sous pression, comprenant un mélange d'un caoutchouc renfermant un caoutchouc halogénobutyle et un copolymère d'oléfine non élastomère contenant des groupes acide non neutralisés, la proportion de caoutchouc étant égale ou supérieure à 50 % en poids et la proportion de copolymère étant inférieure à 50 % en poids, le mélange étant dépourvu d'une phase de polymère d'oléfine thermoplastique continue.

3. Composition suivant la revendication 2, dans laquelle le copolymère est un copolymère d'éthylène et d'acide acrylique.

4. Composition suivant chacune des revendications 2 et 3, dans laquelle le caoutchouc consiste en un mélange de 50 à 80 % en poids d'un caoutchouc halogénobutyle et de 20 à 50 % en poids d'un autre caoutchouc.

5. Composition suivant chacune des revendications 2 et 3, dans laquelle le caoutchouc consiste en un caoutchouc halogénobutyle.

6. Composition suivant l'une quelconque des revendications 2 à 5, dans laquelle le caoutchouc halogénobutyle est un caoutchouc chlorobutyle ou un caoutchouc bromobutyle, ledit caoutchouc halogénobutyle contenant au moins 0,5 % en poids d'halogène combiné, avec jusqu'à 1 atome d'halogène par double liaison de copolymère de caoutchouc.

7. Composition suivant l'une quelconque des revendications 2 à 6, dans laquelle le copolymère d'oléfine contient 60 à 80 moles % d'éthylène.

8. Composition suivant l'une quelconque des revendications 2 à 7, dans laquelle le rapport pondéral du copolymère d'oléfine au caoutchouc comprenant un caoutchouc halogénobutyle est compris dans l'intervalle de 25:75 à 10:90.

9. Composition suivant l'une quelconque des revendications 2 à 8, dans laquelle le caoutchouc a été mélangé intimement au copolymère d'oléfine.

10. Composition élastomère vulcanisée par compression, obtenue par réaction, en un mélange, d'un caoutchouc comprenant un caoutchouc halogénobutyle et un copolymère d'oléfine non élastomère contenant des groupes acides, ledit polymère contenant des groupes acide étant neutralisé ou étant en présence d'un agent neutralisant, pour former des chaînons entre les polymères de caoutchouc halogénobutyle et les constituants copolymériques, la proportion de caoutchouc dans le mélange étant égale ou supérieure à 50 % en poids et la proportion de copolymère étant inférieure à 50 % en poids, le mélange étant dépourvu d'une phase de polymère d'oléfine thermoplastique continue.

11. Utilisation d'une composition présentant une bonne adhérence à un élastomère, ladite composition comprenant la composition suivant l'une quelconque des revendications 2 à 10.

12. Article composite élastomère comprenant un substrat élastomère covulcanisé avec, et servant de support à, un composant renfermant une composition suivant la revendication 10.

13. Article composite suivant la revendication 12, dans lequel le substrat consiste en la carcasse d'un bandage pneumatique et la composition suivant la revendication 10 est sous forme d'un calandrage intérieur de bandage pneumatique.
